# EUROPÄISCHE PATENTANMELDUNG

(11) **EP 4 733 100 A1**
(43) Veröffentlichungstag der Anmeldung: **29.04.2026**
(21) Anmeldenummer: 25209574.0
(22) Anmeldetag: 17.10.2025
(51) Int. Cl.: B60J 5/04

(54) **RAHMEN FÜR EIN SICHTFENSTER EINES FAHRZEUGS**

(30) Priorität: 22.10.2024 DE 102024130780
(71) Anmelder: MAN Truck & Bus SE, 80995 München (DE)
(72) Erfinder: Schmidt, Alexander, 80995 München (DE); Bullacher, Florian, 80995 München (DE)

(57) **Zusammenfassung**

Die vorliegende Offenbarung betrifft einen Rahmen für ein Sichtfenster, insbesondere ein Tiefsichtfenster, eines Fahrzeugs, insbesondere eines Nutzfahrzeugs, zur Aufnahme einer absenkbaren Scheibe, insbesondere einer Seitenscheibe, des Fahrzeugs, wobei der Rahmen, insbesondere in montiertem Zustand, einen Dichtbereich definiert, der eingerichtet ist, eine, insbesondere abdichtende, Barriere, insbesondere eine Nass-/Trockenraum-Trennung, für die absenkbare Scheibe bereitzustellen. Ferner ist ein entsprechendes Sichtfenster, insbesondere ein Tiefsichtfenster, das den Rahmen umfasst bereitgestellt, sowie ein Fahrzeug, insbesondere ein Nutzfahrzeug, das mit dem Rahmen und/oder dem Sichtfenster, insbesondere dem Tiefsichtfenster, ausgestattet ist.

## Beschreibung

Die vorliegende Erfindung betrifft einen Rahmen für ein Sichtfenster, insbesondere ein Tiefsichtfenster, eines Fahrzeugs, insbesondere eines Nutzfahrzeugs, zur Aufnahme einer absenkbaren Scheibe, insbesondere einer Seitenscheibe, des Fahrzeugs.

Die vorliegende Offenbarung bezieht sich auf den Bereich der Fahrzeugbaukomponenten, insbesondere auf Rahmenkonstruktionen für Fenster, z.B. Sichtfenster in Fahrzeugen, vorzugsweise in Nutzfahrzeugen.

Insbesondere bezieht sich die vorliegende Offenbarung auf einen Rahmen für ein Sichtfenster, der speziell darauf ausgelegt ist, eine effektive Nass-/Trockenraum-Trennung für eine absenkbare Scheibe zu gewährleisten, wodurch unter anderem eine verbesserte Abdichtung und/oder erhöhte Langlebigkeit der Fensterkonstruktion erreicht werden kann.

Auf dem Gebiet der Fahrzeugkonstruktion, insbesondere bei Nutzfahrzeugen, spielt die Gestaltung und/oder Funktionalität von Sichtfenstern eine wichtige Rolle für die Sicherheit und/oder den Komfort. Es ist üblich, dass Fahrzeuge mit Sichtfenstern ausgestattet sind, die eine klare Sicht nach außen ermöglichen und gleichzeitig den Innenraum vor äußeren Einflüssen schützen. Bekannte Systeme umfassen typischerweise Scheiben, die in einem Rahmen, z.B. bei Tiefsichtfenstern, eingefasst sind. Bei absenkbaren Scheiben, wie Seitenscheiben, von Nutzfahrzeugen ist die Integration eines effektiven Dichtsystems von entscheidender Bedeutung, um z.B. den Innenraum vor Wasser/Feuchtigkeit, Verunreinigungen wie z.B. Staub und/oder anderen Umwelteinflüssen zu schützen.

Gemäß bekannten Technologien werden Rahmen für Sichtfenster oft als einteilige Konstruktionen ausgeführt, die gewisse Herausforderungen in Bezug auf Dichtigkeit und/oder Langlebigkeit mit sich bringen. Obwohl diese Ansätze eine grundlegende Funktionalität bieten, offenbaren sie Schwächen/Nachteile in der Anpassungsfähigkeit an unterschiedliche Umgebungsbedingungen und/oder in der Fähigkeit, eine insbesondere dauerhafte Abdichtung zu gewährleisten.

Trotz einiger Fortschritte auf dem Gebiet der Fahrzeugfensterkonstruktion besteht nach wie vor ein Bedarf an verbesserten Rahmenkonstruktionen, die eine effektivere und langlebigere Dichtung zwischen der Scheibe und dem Fahrzeugkörper bieten. Die Herausforderung besteht darin, eine Konstruktion zu entwickeln, die sowohl die strukturelle Integrität des Rahmens als auch eine hohe Dichtleistung unter variierenden Betriebsbedingungen aufrechterhalten kann. Die Fähigkeit, eine konstante Dichtleistung zu gewährleisten, ist besonders kritisch, um den Schutz des Innenraums vor äußeren Einflüssen zu maximieren und/oder gleichzeitig die Sicht und/oder Sicherheit zu erhalten.

Es ist daher eine der vorliegenden Erfindung zugrunde technische Aufgabe, eine verbesserte Rahmenkonstruktion für Sichtfenster, insbesondere Tiefsichtfenster, von Fahrzeugen bereitzustellen, welche die Nachteile bekannter Systeme wenigstens teilweise überwindet.

Die Aufgabe wird durch die Merkmale der unabhängigen Ansprüche gelöst. Die abhängigen Patentansprüche beschreiben bevorzugte Ausführungsformen. Weitere Aspekte, Vorteile und Merkmale ergeben sich aus den abhängigen Ansprüchen, der Beschreibung und den begleitenden Zeichnungen.

Die Erfindung betrifft einen Rahmen für ein Sichtfenster, insbesondere ein Tiefsichtfenster, eines Fahrzeugs, insbesondere eines Nutzfahrzeugs, zur Aufnahme einer absenkbaren Scheibe, insbesondere einer Seitenscheibe, des Fahrzeugs;
wobei der Rahmen, insbesondere in montiertem Zustand, einen Dichtbereich definiert, der eingerichtet ist, eine, insbesondere abdichtende, Barriere, insbesondere eine Nass-/Trockenraum-Trennung, für die absenkbare Scheibe bereitzustellen.

Die Erfindung betrifft ein Sichtfenster, insbesondere Tiefsichtfenster, für ein Fahrzeug, insbesondere ein Nutzfahrzeug, umfassend:
einen Rahmen nach einem oder mehreren der hierin beschriebenen Aspekte und/oder Ausführungsbeispiele, und
wenigstens eine Scheibe, die wenigstens teilweise innerhalb des Dichtbereichs bewegbar, insbesondere absenkbar und/oder hochfahrbar, ist.

Die Erfindung betrifft ein Fahrzeug, insbesondere ein Nutzfahrzeug, das mit einem Rahmen nach einem oder mehreren der hierin beschriebenen Aspekte und/oder Ausführungsbeispiele und/oder einem Sichtfenster, insbesondere einem Tiefsichtfenster, nach einem oder mehreren der hierin beschriebenen Aspekte und/oder Ausführungsbeispiele ausgestattet ist.

Diese Aufgabe wird insbesondere von der Herausforderung angesprochen, eine effiziente und/oder zuverlässige Abdichtung für insbesondere absenkbare Scheiben, insbesondere bei Tiefsichtfenstern in Fahrzeugen und insbesondere in Nutzfahrzeugen, zu gewährleisten.

Ein hierin beschriebene Rahmen kann als Vorrichtung, System, Einrichtung, (Bau-)Teil und/oder Element verstanden werden, die eingerichtet ist zur Aufnahme einer Scheibe, insbesondere einer absenkbaren Scheibe, z.B. aus einem Glasmaterial und/oder zur Befestigung in einem anderen System, z.B. einem Fahrzeug, insbesondere einem Nutzfahrzeug, vorzugsweise einem Fahrerhaus eines Lastkraftwagens (LKW), beispielsweise einer Tür, wie einer Fahrertür und/oder Beifahrertür desselben. Der Rahmen kann, z.B. durch die, insbesondere absenkbare, Scheibe bzw. Fensterscheibe (oder Kurbelscheibe), z.B. aus Glas, eine Trennung, Barriere und/oder Grenze zwischen einem Innenraum bzw. einem Innenbereich, z.B. einem Inneren der Fahrerkabine und einem Außenraum bzw. einem Außenbereich, z.B. der Umgebung, bereitstellen. Der Rahmen kann aus einem Kunststoffmaterial hergestellt sein.

Ein Tiefsichtfenster kann ein Fenster, insbesondere ein Sichtfenster, sein, das beispielsweise bei Fahrzeugen, insbesondere Nutzfahrzeugen, wie z.B. ein Lastkraftwagen (LKW) oder dergleichen, tiefer, niedriger und/oder auf geringerer Höhe, z.B. in der Seitenwand bzw. einer Tür und/oder Beifahrertür des Fahrzeugs angeordnet, montiert, und/oder eingebaut ist, um z.B. dem Fahrer und/oder einem oder mehreren der Insassen eine verbesserte und/oder vergrößerte Sicht auf die Umgebung zu ermöglichen. Ein Tiefsichtfenster kann z.B. unterhalb einer Seitenscheibe der Fahrerkabine angeordnet sein. Beispielsweise können ein oder mehrere Tiefsichtfenster bereitgestellt werden. Ein (erstes) Tiefsichtfenster kann sich z.B. an der Fahrertür befinden und/oder ein (zweites) Tiefsichtfenster an der Beifahrertür, der Fahrerkabine, oder umgekehrt. Das eine oder die mehreren Tiefsichtfenster können beispielsweise in der unteren Hälfte der Tür und/oder unterhalb des entsprechenden Seitensichtfensters der Fahrerkabine angeordnet sein. Ein Tiefsichtfenster kann eine oder mehrere, z.B. feste (fest verbaute), unbewegliche, statische bzw. stationäre Scheiben aufweisen, die mit dem Rahmen verbindbar bzw. verbunden sind. Ein Tiefsichtfenster kann optional wenigstens eine, insbesondere wenigstens zwei, feste Scheibe(n) aufweisen, die an dem Rahmen, bzw. jeweils an den beiden (inneren/äußeren) hierin beschriebenen Rahmenelementen anbringbar sind und/oder einander im Wesentlichen gegenüberliegen. Das Tiefsichtfenster kann beispielsweise eine Außenscheibe, also eine Scheibe, welcher der Umgebung zugewandt ist bzw. zuzuwenden ist, aufweisen, welche z.B. aus Glas hergestellt ist und sich im Türaußenblech des Türrohbaus befindet. Das Tiefsichtfenster kann eine optionale Innenscheibe, also eine Scheibe, die dem Innenraum zugewandt ist bzw. zuzuwenden ist, aufweisen, welche aus einem anderen Material, z.B. Polycarbonat, hergestellt ist und sich in der Türverkleidung befindet. Die feste Innenscheibe ist nicht zwingend notwendig, sondern kann als eine (weitere) Sicherheit z.B. zur Verbesserung der Akustik und/oder zur Abdichtung gegen Störeinflüsse dienen. Alternativ oder zusätzlich kann die feste Innenscheibe ferner zum Schutz beitragen, indem sie verhindern kann, dass jemand in die Öffnung bzw. den Kanal, z.B. des Rahmens, greifen kann, beispielsweise wenn die Scheibe abgesenkt wird. Die absenkbare Scheibe bzw. die Kurbelscheibe kann sich z.B. zwischen den wenigstens zwei festen Scheiben des Tiefsichtfensters bewegen (oder wenigstens zwischen den Rahmenelementen, z.B. wenn nur eine, z.B. feste Außenscheibe, jedoch keine Innenscheibe, verwendet wird) und/oder zwischen dem hierin beschriebenen äußeren Rahmenelement und dem inneren Rahmenelement bewegbar, insbesondere absenkbar und/oder hochfahrbar, sein. Die feste(n) Scheibe(n) für das Tiefsichtfenster bzw. den hierin beschriebenen Rahmen können z.B. verklebt werden. Der Rahmen inklusive der festen Scheibe(n) kann beispielsweise durch eine Steck-, Klippverbindung etc. im Türrohbau befestigt werden.

Eine absenkbare Scheibe kann als Fenster-, Kurbel- bzw. Glasscheibe verstanden werden, welche z.B. innerhalb des hierin beschriebenen Rahmens, bewegbar ist. Die absenkbare Scheibe kann beispielsweise die Scheibe eines Seitenfensters des Fahrzeugs sein, z.B. die Seitenscheibe einer Fahrerkabine eines Lastkraftwagens (LKW), beispielsweise in einer Tür, wie einer Fahrertür und/oder Beifahrertür desselben. Beispielsweise kann die absenkbare Scheibe, z.B. Seitenfensterscheibe, nach unten bewegt werden, insbesondere geöffnet werden (z.B. wenigstens teilweise; Öffnungsstellung). Dies führt dazu, dass die absenkbare Scheibe in eine durch den Rahmen des Tiefsichtfensters gebildete Öffnung wenigstens teilweise eindringt und diese wenigstens teilweise, bzw. je nach Stellung, im Wesentlichen vollständig, blockiert oder verschließt. Die durch den Rahmen des Tiefsichtfensters gebildete Öffnung kann zwischen den wenigstens zwei festen Scheiben des Tiefsichtfensters liegen, oder alternativ vor/hinter wenigstens einer festen Scheibe, z.B. einer Außenscheibe. Alternativ oder zusätzlich kann die absenkbare Scheibe, z.B. Seitenfensterscheibe, nach oben bewegt werden, insbesondere geschlossen bzw. verschlossen werden (z.B. wenigstens teilweise; Verschlussstellung bzw. Schließstellung). Dies führt dazu, dass die absenkbare Scheibe, die durch den Rahmen des Tiefsichtfensters gebildete Öffnung verlässt bzw. ausfährt und diese wenigstens teilweise, bzw. je nach Stellung, im Wesentlichen vollständig, freigibt. Bei bzw. während dieser/n Bewegung(en) kann ein hierin beschriebener Dichtbereich, bzw. eine, insbesondere abdichtende, Barriere, wie hierin beschrieben, im Wesentlichen aufrechterhalten werden, und/oder im Wesentlichen dichtend bleiben. Diese Bewegung(en) ermöglicht/en es den Insassen, beispielsweise die Seitenfenster z.B. nach Bedarf zu öffnen und/oder zu schließen, die Belüftung im Fahrzeug zu kontrollieren, z.B. um die Luftzirkulation zu verbessern und/oder mit der Außenumgebung zu interagieren, ohne dafür die Türen öffnen zu müssen. Derartige Fenster können z.B. mittels einem elektrischen Schalter oder einer Kurbel betätigbar, bewegbar, aktivierbar und/oder verfahrbar sein.

Der hierin beschriebene Rahmen für ein Sichtfenster, insbesondere ein Tiefsichtfenster, kann einteilig oder zweiteilig konzipiert, ausgebildet, ausgestaltet, konstruiert und/oder aufgebaut sein, was eine flexible Montage und/oder Demontage ermöglichen kann. Diese Konstruktion kann eine signifikante Verbesserung in der Abdichtungstechnik darstellen, indem sie eine effektive Nass-/Trockenraum-Trennung bietet, die insbesondere für die absenkbare Scheibe von Bedeutung ist. Beispielsweise kann ein einteiliges Rahmenelement verwendet werden, das eine Öffnung, z.B. einen Schlitz für die, insbesondere absenkbare, Scheibe (und ggf. das eine bzw. die mehreren Dichtmittel) aufweist. Auch bei einem einteiligen Rahmen kann es ein erstes und zweits bzw. äußeres/inneres Rahmenelement geben. Alternativ dazu kann der Rahmen zweiteilig ausgebildet sein, beispielsweise ein erstes und zweites Rahmenelement umfassen, die miteinander verbindbar sind und/oder einen Zwischenraum für die, insbesondere absenkbare, Scheibe (und ggf. das eine bzw. die mehreren Dichtmittel) ausbilden. Die zweiteilige Ausführung des Rahmens ermöglicht eine Anpassung an die absenkbare Scheibe, was die Bildung einer abdichtenden Barriere erleichtert und/oder somit das Eindringen von Wasser, Feuchtigkeit und/oder Verunreinigungen in den Fahrzeuginnenraum minimiert.

Der Rahmen für ein Sichtfenster, insbesondere ein Tiefsichtfenster, eines Fahrzeugs, insbesondere eines Nutzfahrzeugs, stellt eine innovative Lösung dar, die speziell darauf ausgelegt ist, die visuellen Anforderungen des Fahrers bzw. des Insassen zu unterstützen und/oder gleichzeitig die strukturelle Integrität des Fahrzeugs zu wahren. Die Verbindung bzw. Schnittstelle zwischen der absenkbaren Scheibe und dem Rahmen ermöglicht eine Aufrechterhaltung der strukturellen Stabilität und/oder der Dichtigkeit, z.B. gegenüber externen Einflüssen. Die zweiteilige Ausführung des Rahmens kann außerdem zu einer verbesserten Anpassungsfähigkeit und/oder Installationsflexibilität führen. Ferner kann dadurch eine modulare Bauweise bereitgestellt werden, welche die Montage und/oder Wartung des Rahmens und der zugehörigen Komponenten erleichtert. Der erfindungsgemäße Rahmen bzw. das erfindungsgemäße Sichtfenster, bzw. Tiefsichtfenster, ermöglicht auch eine akustische Verbesserung. Beispielsweise haben die Erfinder überraschenderweise festgestellt, dass die Verwendung eines erfindungsgemäßen Rahmens bzw. des erfindungsgemäßen Sichtfensters, bzw. Tiefsichtfensters, zu keiner nennenswerten akustischen Verschlechterung z.B. innerhalb der Fahrerkabine führt.

Insbesondere in montiertem Zustand, kann der Rahmen einen Dichtbereich definieren, vorgeben und/oder ausbilden. Der Dichtbereich kann ein Bereich, Abschnitt und/oder eine Region sein, der z.B. zwischen den hierin beschriebenen Rahmenelementen vorgesehen und/oder ausgebildet ist und/oder eingerichtet und/oder ausgelegt ist, eine insbesondere effektive Barriere, Schicht, Grenze, Grenzschicht und/oder Blockade gegen Verunreinigungen wie z.B. Wasser, Luft und/oder Schmutz bereitzustellen, was z.B. unter anspruchsvollen Fahrbedingungen von Bedeutung ist. Die Kommunikationsmechanismen zwischen dem Rahmen und dem Dichtbereich können aufeinander abgestimmt und/oder angepasst sein, um eine nahtlose, kontinuierliche, konstante und/oder dauerhafte Abdichtung zu gewährleisten.

Der Dichtbereich kann eingerichtet sein, eine insbesondere abdichtende Barriere, insbesondere eine Nass-/Trockenraum-Trennung, für die absenkbare Scheibe bereitzustellen. Eine Nass-/Trockenraum-Trennung kann eine Trennung zwischen einem Nassraum, z.B. der Umgebung/Außenwelt, und einem Trockenraum, z.B. dem Innenraum der Fahrerkabine bezeichnen. Der Dichtbereich kann beispielsweise so konzipiert sein, dass er eine insbesondere effektive Abdichtung in im Wesentlichen jeder Position und/oder Stellung der insbesondere absenkbaren Scheibe gewährleisten kann. Ferner kann der Dichtbereich sicherstellen, dass die Abdichtung bzw. Trennung auch bei bzw. während einer Bewegung der Scheibe und/oder unter Einfluss von externen Kräften intakt bzw. aufrechterhalten und/oder im Wesentlichen dichtend bleibt. Der erfindungsgemäße Dichtbereich ermöglicht auch eine akustische Verbesserung. Beispielsweise haben die Erfinder überraschenderweise festgestellt, dass die Verwendung eines erfindungsgemäßen Dichtbereichs, zu keiner nennenswerten akustischen Verschlechterung z.B. innerhalb der Fahrerkabine führt.

Gemäß einer Ausführungsform kann der, insbesondere einteilige bzw. zweiteilige, Rahmen ein äußeres Rahmenelement (z.B. erstes Rahmenteil) und ein inneres Rahmenelement (z.B. zweites Rahmenteil) umfassen. Das äußere Rahmenelement kann einer Außenseite des Fahrzeugs zuzuwenden sein bzw. zugewandt sein, z.B. nach und/oder im Wesentlichen während der Montage. Das äußere Rahmenelement kann eingerichtet sein, eine erste z.B. feste (Außen-)Scheibe, z.B. aus einem ersten Material, wie Glas, aufzunehmen. Das innere Rahmenelement kann einem Innenraum des Fahrzeugs zuzuwenden sein bzw. zugewandt sein, z.B. nach und/oder im Wesentlichen während der Montage. Das innere Rahmenelement kann eingerichtet sein, eine zweite z.B. feste (Innen-)Scheibe, z.B. aus einem zweiten Material, was sich von dem ersten Material unterscheidet, wie Polycarbonat, aufzunehmen; diese zweite feste (Innen-)Scheibe ist jedoch optional. Diese Konfiguration kann eine effiziente und/oder effektive Abdichtung zwischen dem Fahrzeuginneren und der Umgebung ermöglichen, indem sie eine Schnittstelle zwischen der absenkbaren Scheibe und dem Rahmen schafft. Diese Schnittstelle kann auch die akustischen Anforderungen z.B. innerhalb der Fahrerkabine genügen bzw. diese sicherstellen.

Die absenkbare Scheibe kann im Wesentlichen zwischen dem äußeren Rahmenelement und dem inneren Rahmenelement angeordnet bzw. montiert und/oder bewegbar, insbesondere absenkbar, z.B. öffenbar und/oder hochfahrbar z.B. schließbar, sein. Diese Konfiguration bzw. die Konstruktion des hierin beschriebenen Rahmens kann eine präzise Führung und/oder Positionierung der absenkbaren Scheibe, insbesondere im Wesentlichen während des Absenk- und/oder Hochfahrprozesses ermöglichen, was nicht nur die mechanische Belastung auf die Scheibe selbst, sondern auch auf die Dichtungselemente bzw. den Dichtbereich reduzieren kann. Der Dichtbereich kann eine insbesondere kontinuierliche bzw. dynamische Anpassung des Anpressdrucks an die absenkbare Scheibe bereitstellen, z.B. in Abhängigkeit von einer Position und/oder Stellung der Scheibe. Dies ist besonders vorteilhaft unter variierenden Betriebsbedingungen, wie unterschiedlichen Fahrzeuggeschwindigkeiten oder bei wechselnden Wetterbedingungen, da es die Integrität der Nass-/Trockenraum-Trennung aufrechterhalten kann.

Der Dichtbereich kann sich im Wesentlichen zwischen dem äußeren Rahmenelement und dem inneren Rahmenelement befinden. Es ist nicht notwendig, dass sich der Dichtbereich (und/oder die Scheibe) genau mittig zwischen dem äußeren Rahmenelement und dem inneren Rahmenelement befindet. Vielmehr kann sich der Dichtbereich, z.B. je nach bevorzugter Ausgestaltung, näher an dem äußeren Rahmenelement als an dem inneren Rahmenelement befinden, bzw. versetzt angeordnet sein. Dies kann z.B. die Montage und/oder Demontage erleichtern. Die Anordnung des Dichtbereichs zwischen dem äußeren und dem inneren Rahmenelement kann zu einer verbesserten mechanischen Stabilität des gesamten Rahmens führen, da z.B. die Kräfte, die durch den Dichtbereich aufgenommen werden müssen, gleichmäßiger über die Struktur des Rahmens verteilt werden können. Dies kann auch die Wahrscheinlichkeit von Verformungen und/oder Beschädigungen des Rahmens führen und/oder den Dichtbereich dazwischen fixieren, was die Lebensdauer des gesamten Fenstersystems erhöhen kann. Zudem ermöglicht diese Konfiguration eine vereinfachte Montage und Wartung des Rahmens und der Dichtung, da beide Elemente des Rahmens zugänglich sind.

Die, insbesondere abdichtende, Barriere kann bei einer Bewegung der absenkbaren Scheibe im Wesentlichen aufrechterhalten werden und/oder im Wesentlichen dichtend bleiben. Beispielsweise kann die, insbesondere abdichtende, Barriere insbesondere im Wesentlichen während des Absenkens und/oder Hochfahrens der Scheibe aufrechterhalten werden und/oder im Wesentlichen dichtend bleiben. Diese spezifischen Mechanismen der Kommunikation zwischen den Komponenten des Rahmens und der absenkbaren Scheibe ermöglichen es, dass trotz der Bewegung der absenkbaren Scheibe, sei es beim Absenken z.B. für frische Luftzufuhr und/oder beim Hochfahren z.B. zur Schließung des Fensters, die Integrität der Barriere nicht kompromittiert wird. Dies ist besonders relevant in Umgebungen, in denen die Trennung von Nass- und Trockenbereichen kritisch ist, wie beispielsweise in Nutzfahrzeugen, die unter verschiedenen Wetterbedingungen eingesetzt werden. Die Aufrechterhaltung der Barriere im Wesentlichen während der Bewegung der Scheibe kann sicherstellen, dass Wasser, Feuchtigkeit und/ Verunreinigungen darüber nicht in den Innenraum des Fahrzeugs eindringen können. Die Fähigkeit, eine insbesondere abdichtende Barriere zu gewährleisten, während die Scheibe ihre Position bzw. Stellung ändert, kann einen erheblichen Vorteil in Bezug auf die Funktionalität und/oder Sicherheit des Fahrzeugs bieten, indem sie einen effektiven Schutz gegen das Eindringen von Wasser, Feuchtigkeit und/oder Verunreinigungen bietet, unabhängig von der Position der Seitenscheibe.

Die insbesondere abdichtende Barriere, die eine Nass-/Trockenraum-Trennung für die absenkbare Scheibe bereitstellen kann, kann durch wenigstens ein Dichtmittel, vorzugsweise wenigstens zwei Dichtmittel, ausgebildet sein. Es ist denkbar, z.B. wenigstens ein Dichtmittel entsprechend auszugestalten bzw. auszuformen, und dies in dem einteiligen bzw. zweiteiligen Rahmen anzuordnen. Die insbesondere abdichtende Barriere kann beispielsweise in dem Dichtbereich angeordnet sein bzw. diesen bereitstellen, diesem entsprechen und/oder ausbilden. Die hierin beschriebenen Dichtmittel bzw. die Dichtlippen, der Dichtbereich, die Abdichtung und/oder die abdichtende Barriere können, insbesondere jeweils einzeln oder in Kombination, zu einer Verbesserung der Akustik beitragen. Die Verwendung eines oder mehrerer Dichtmittel zur Ausbildung der Barriere verbessert die Flexibilität bei der Gestaltung des Rahmens und der Dichtung. Durch die Auswahl spezifischer Dichtmittel kann die Abdichtungseffizienz optimiert werden, um den Anforderungen verschiedener Fahrzeugtypen und Einsatzbedingungen gerecht zu werden. Das eine oder die mehreren Dichtmittel können mit wenigstens einer Beschichtung, z.B. einer reiboptimierten Beschichtung, versehen werden bzw. mit einer Beschichtung ausgeführt werden, z.B. mit einer Flock- und/oder Gleitlackbeschichtung, um eine Reibung zwischen der, insbesondere absenkbaren, Scheibe und dem/den Dichtmittel(n) zu reduzieren bzw. minimieren. Die Beschichtung kann z.B. ein Gleiten der Scheibe fördern und/oder ein Quietschen der Scheibe verringern/verhindern.

Die Fähigkeit, eine zuverlässige Nass-/Trockenraum-Trennung zu gewährleisten, ist besonders für Nutzfahrzeuge von Bedeutung, bei denen der Schutz der Kabine und der Ladung vor äußeren Einflüssen wie Wasser, Feuchtigkeit und/oder Verunreinigungen wie Staub entscheidend sein kann. Die spezifische Ausgestaltung der abdichtenden Barriere durch Dichtmittel bietet somit eine effektive Lösung zur Verbesserung der Fahrzeugleistung und des Komforts, indem sie dazu beiträgt, die Innenräume trocken und sauber zu halten, was letztlich die Zufriedenheit der Nutzer und die Langlebigkeit des Fahrzeugs steigert.

Das äußere Rahmenelement und das innere Rahmenelement können jeweils ein Dichtmittel umfassen. Beispielsweise kann das äußere Rahmenelement ein erstes Dichtmittel, z.B. eine Außendichtung, und das innere Rahmenelement ein zweites Dichtmittel, z.B. eine Innendichtung, umfassen, oder umgekehrt. Diese können den Dichtbereich ausbilden bzw. definieren oder festlegen. Durch die Verwendung von Dichtmitteln in beiden Rahmenelementen kann eine doppelte und/oder duale Abdichtungsebene geschaffen werden, die eine effektivere Isolierung gegenüber äußeren Einflüssen wie Verunreinigungen, Schmutz und/oder Feuchtigkeit bietet. Diese Dichtmittel können zudem die akustischen Anforderungen z.B. innerhalb der Fahrerkabine sicherstellen.

Das Dichtmittel des äußeren Rahmenelements und das Dichtmittel des inneren Rahmenelements können einander im Wesentlichen gegenüberliegen bzw. einander gegenüberliegend angeordnet sein, was eine Verbesserung in der Effizienz und Wirksamkeit der Abdichtung zwischen dem Fahrzeuginneren und der Außenumgebung ermöglichen kann. Die gegenüberliegende Anordnung der Dichtmittel ermöglicht eine präzisere und gleichmäßigere Druckverteilung entlang des Dichtbereichs, was zu einer verbesserten Abdichtungsleistung führt. Diese Konfiguration fördert nicht nur die Schaffung einer effektiveren Barriere gegen Verunreinigungen und/oder Feuchtigkeit, sondern kann auch dazu beitragen, z.B. die Geräuschdurchlässigkeit zu reduzieren. Durch die Optimierung der Positionierung der Dichtmittel wird zudem sichergestellt, dass die absenkbare Scheibe in jeder Position innerhalb des Rahmens, sei es vollständig geschlossen, teilweise/partiell geöffnet oder vollständig geöffnet, eine im Wesentlichen konsistente, konstante, gleichmäßige und/oder gleichbleibende Abdichtung erfährt. Diese Anordnung trägt wesentlich zur Langlebigkeit und Zuverlässigkeit des Dichtsystems bei, da sie die Wahrscheinlichkeit von Leckagen und damit verbundenen Schäden durch eindringendes Wasser, eindringende Feuchtigkeit und/oder Verunreinigungen minimiert. Darüber hinaus erleichtert die gegenüberliegende Anordnung der Dichtmittel die Montage und Wartung, da ein Austausch der Dichtmittel ermöglicht wird.

In montiertem Zustand, also beispielsweise wenn der Rahmen im Wesentlichen vollständig zusammengesetzt, zusammengebaut und/oder am/im Fahrzeug installiert bzw. montiert ist, kann das Dichtmittel des äußeren Rahmenelements in Wirkverbindung, insbesondere in vorzugsweise direktem Kontakt, mit dem Dichtmittel des inneren Rahmenelements stehen. Durch diese Konfiguration wird eine verbesserte Barriere gegen das Eindringen von Wasser und Feuchtigkeit in den Fahrzeuginnenraum geschaffen.

Das Dichtmittel des äußeren Rahmenelements und das Dichtmittel des inneren Rahmenelements, können insbesondere im Wesentlichen vollständig, aneinander anliegen, insbesondere kraftschlüssig und/oder reibschlüssig. Beispielsweise können die entsprechenden Dichtlippen der jeweiligen Dichtmittel aneinander anliegen, um den Dichtbereich, bzw. die, insbesondere abdichtende Barriere, insbesondere die Nass-/Trockenraum-Trennung für die absenkbare Scheibe bereitzustellen. Alternativ oder zusätzlich können das Dichtmittel des äußeren Rahmenelements und das Dichtmittel des inneren Rahmenelements gegeneinanderdrücken und/oder gegeneinander vorgespannt sein, insbesondere bevor die absenkbare Scheibe in den Dichtbereich eintritt. Diese Dichtmittel können im Wesentlichen vollständig aneinander anliegen, was eine nahezu lückenlose Abdichtung zwischen dem äußeren und inneren Rahmenelement bewirken kann. Dies ist vorteilhaft, um das Eindringen von Verunreinigungen und/oder Feuchtigkeit zu minimieren und somit die Integrität des Fahrzeuginnenraums zu schützen. Darüber hinaus wird durch das, insbesondere kraftschlüssige, Anliegen der Dichtmittel aneinander eine mechanische Verbindung, insbesondere eine Druckverbindung, erzeugt, die nicht nur auf der bloßen Berührung basiert, sondern auch auf einer Kraftübertragung, die sicherstellen kann, dass die Dichtmittel unter verschiedenen Betriebsbedingungen, wie Vibrationen oder Temperaturschwankungen, in effektivem Kontakt bleiben. Die Option, dass die Dichtmittel gegeneinanderdrücken, verstärkt diesen Effekt, indem ein vorzugsweise kontinuierlicher Druck aufrechterhalten wird, der die Dichtwirkung über die Zeit stabilisieren und somit eine im Wesentlichen dauerhafte, konstante und/oder gleichmäßige Abdichtung gewährleisten kann. Besonders hervorzuheben ist, dass diese verbesserte Dichtungsmechanik bereits greift, bevor die absenkbare Scheibe in den Dichtbereich eintritt. Dies prädestiniert den Rahmen dazu, bereits im Voraus eine abdichtende Barriere zu schaffen, die den Eintritt von Verunreinigungen und/oder Feuchtigkeit bzw. Schmutz effektiv verhindert, noch bevor die Scheibe selbst in eine bestimmte Position/Stellung gebracht wird.

Das Dichtmittel des äußeren Rahmenelements und das Dichtmittel des inneren Rahmenelements können wenigstens teilweise, insbesondere kraftschlüssig,
aneinander, und/oder,
insbesondere beidseitig, an der Scheibe anliegen,
während die absenkbare Scheibe in den Dichtbereich eintritt oder nachdem die absenkbare Scheibe in den Dichtbereich eingetreten ist.

Die Möglichkeit, dass die Dichtmittel zusätzlich an der Scheibe anliegen und insbesondere beidseitig an der Scheibe anliegen, verbessert die Dichtwirkung weiter, indem sie eine kontinuierliche und/oder anpassbare Abdichtung entlang der Kanten und/oder Fläche der absenkbaren Scheibe gewährleistet. Dies ist besonders relevant, während die absenkbare Scheibe in den Dichtbereich eintritt oder nachdem sie in den Dichtbereich eingetreten ist, da es sicherstellt, dass die Abdichtung im Wesentlichen zu jedem Zeitpunkt der Bewegung der Scheibe aufrechterhalten bleibt. Dies verbessert außerdem die akustischen Eigenschaften. Wie bereits erwähnt, können die Dichtmittel mit einer Beschichtung, z.B. einer reiboptimierten Beschichtung, versehen werden bzw. mit einer Beschichtung ausgeführt werden, z.B. mit einer Flock- und/oder Gleitlackbeschichtung, um eine Reibung zwischen der, insbesondere absenkbaren, Scheibe und dem/den Dichtmittel(n) zu minimieren, insbesondere während einer Bewegung der, insbesondere absenkbaren, Scheibe. Die Beschichtung kann z.B. ein Gleiten der Scheibe fördern und/oder ein Quietschen der Scheibe verringern/verhindern. Die Dichtmittel in dem unteren Bereich des Rahmens müssen lediglich abschließen, da die absenkbare Scheibe, bzw. die Kurbelscheibe (oft) nicht bis ganz nach unten fährt.

Das eine oder die mehreren Dichtmittel, vorzugsweise das Dichtmittel des äußeren Rahmenelements und/oder das Dichtmittel des inneren Rahmenelements können, z.B. direkt, an einem Sichtkanal, z.B. einem ersten, z.B. äußeren, Sichtkanal und/oder einem zweiten, z.B. inneren, Sichtkanal befestigt und/oder befestigbar sein. Der erste Sichtkanal und der zweite Sichtkanal können mit den entsprechenden Dichtmitteln jeweils einen im Wesentlichen geschlossenen Kanal ausbilden, um z.B. Geräusche und/oder Verunreinigungen, wie Wasser, im Innenraum zu vermeiden bzw. zu reduzieren. Ein Sichtkanal kann ein Teil des entsprechenden Rahmenelements sein bzw. dadurch ausgebildet sein, und beispielsweise eine durch den Rahmen gebildete Öffnung definieren, insbesondere wenigstens teilweise. Die Befestigung des einen oder der mehreren Dichtmittel and dem einen oder mehreren Sichtkanälen kann permanent bzw. unlösbar (z.B. nur durch Kraftaufwand bzw. Zerstören lösbar) sein, oder lösbar. Beispielsweise kann das Dichtmittel, z.B. des inneren Rahmenelements an einem, z.B. inneren, Sichtkanal ein Montageteil sein oder in dem, z.B. inneren, Sichtkanal angespritzt sein. Alternativ oder zusätzlich kann das Dichtmittel, z.B. des äußeren Rahmenelements an einem, z.B. äußeren, Sichtkanal ein Montageteil sein oder in dem, z.B. äußeren, Sichtkanal angespritzt sein. Dies kann auch als 2-K-Bauteil bezeichnet werden. Auch ein Kleben, z.B. Ankleben, und/oder Stecken, z.B. mittels einer Steckverbindung und/oder ein Klipsen, z.B. mittels einer Klippverbindung, o.ä. wäre denkbar.

Das Dichtmittel des äußeren Rahmenelements und/oder das Dichtmittel des inneren Rahmenelements können als eine umlaufende Dichtung ausgebildet sein, die insbesondere jeweils eine im Wesentlichen in sich geschlossene, insbesondere lückenlose, Dichtkontur bilden. Eine umlaufendende Dichtung bzw. eine, in sich geschlossene, insbesondere lückenlose, Dichtkontur, kann eine im Wesentlichen kontinuierliche, konstante und/oder ununterbrochene Barriere z.B. gegen das Eindringen von Verunreinigungen und/oder Feuchtigkeit schaffen. Die Dichtkontur und/oder die entsprechenden Dichtelement kann/können einen variierenden Querschnitt, eine variierende Form und/oder ein variierendes Profil aufweisen, zumindest wenigstens abschnittsweise. Dies kann z.B. abhängig von der Form des Tiefsichtfensters sein. Das eine oder die mehreren Dichtmittel, vorzugsweise das Dichtmittel des äußeren Rahmenelements und/oder das Dichtmittel des inneren Rahmenelements können ein variierendes Profil aufweisen. Dies kann es ermöglichen, schräge Verläufe des Tiefsichtfensters erfolgreich abzudichten, insbesondere bei einem Ein-/Austreten und/oder einem Durchgang der Scheibe. Die Dichtmittel können eine Profildicke aufweisen, die auf eine Scheibendicke abgestimmt ist. Eine Form und/oder Abmessung der Dichtmittel kann jedoch auch im Wesentlichen identisch sein, wie weiter unten ausgeführt. Die umlaufende Dichtung verbessert die Isolierung des Fahrzeuginnenraums gegenüber äußeren Bedingungen und trägt somit zu einem erhöhten Komfort der Insassen bei. Durch die in sich geschlossene Dichtkontur wird die Wahrscheinlichkeit von Leckagen minimiert, was besonders in extremen Wetterbedingungen und/oder z.B. bei der Durchfahrt durch Waschanlagen von Bedeutung ist. Hierdurch kann auch eine verbesserte Abdichtungseffizienz bereitgestellt werden.

Das Dichtmittel des äußeren Rahmenelements und/oder das Dichtmittel des inneren Rahmenelements können in Bezug auf Form, Material und/oder Anordnung aufeinander abgestimmt sein, insbesondere übereinstimmen und/oder einander im Wesentlichen entsprechen. Durch die Abstimmung in Bezug auf Form, Material und/oder Anordnung der Dichtmittel des äußeren und des inneren Rahmenelements kann eine Verbesserung der Abdichtungseffizienz und/oder der Langlebigkeit erreicht werden. Die Abstimmung kann dafür sorgen, dass die Dichtmittel physisch ineinandergreifen bzw. aneinander angreifen und/oder eine nahtlose Übergangsfläche ausbilden und/oder, dass ihre Materialbeschaffenheiten und -eigenschaften, wie Elastizität, Härte und/oder Widerstandsfähigkeit gegen Umwelteinflüsse, harmonieren. Dies gewährleistet, dass die Dichtmittel unter verschiedenen Betriebsbedingungen, einschließlich Temperaturschwankungen und/oder mechanischer Belastung, effektiv zusammenarbeiten, um z.B. eine im Wesentlichen konstante und/oder gleichbleibende Abdichtung zu gewährleisten. Die aufeinander abgestimmten Dichtmittel minimieren zudem das Risiko von Leckagen, indem sie eine im Wesentlichen gleichmäßige Druckverteilung entlang des Dichtbereichs fördern und/oder Spannungen, die zu Verformungen und/oder Rissen führen könnten, reduzieren.

Es ist jedoch möglich, dass Dichtmittel unterschiedliche Formen bzw. unterschiedliche Dichtungsformen aufweisen, die durch das Ein-/Ausfahren der absenkbaren Scheibe resultieren. Beispielsweise kann die absenkbare Scheibe, wenn diese von oben kommt bzw. von oben nach unten fährt, also z.B. geöffnet wird (oder umgekehrt, also z.B. geschlossen wird), die Innen- und Außendichtung öffnen und ein Umklappen vermeiden.

Das eine oder die mehreren Dichtmittel, vorzugsweise das Dichtmittel des äußeren Rahmenelements und/oder das Dichtmittel des inneren Rahmenelements können, z.B. aus einem Elastomer, z.B. einem thermoplastischen Elastomere (TPE), oder aus einem Kautschuk, z.B. einem Synthesekautschuk wie, z.B. Ethylen-Propylen-Dien-Kautschuk (EPDM) hergestellt sein.

### KURZBESCHREIBUNG DER ZEICHNUNGEN

Ausführungsbeispiele der Erfindung werden nun unter Bezugnahme auf die beigefügten Zeichnungen beschrieben. Damit die oben genannten Merkmale der vorliegenden Offenbarung im Detail verstanden werden können, kann eine detailliertere Beschreibung der Offenbarung, die oben kurz zusammengefasst wurde, durch Bezugnahme auf Ausführungsbeispiele erhalten werden. Die begleitenden Zeichnungen beziehen sich auf Ausführungsformen der Offenbarung und werden im Folgenden beschrieben:
- Fig. 1A: zeigt einen erfindungsgemäßen Rahmen für ein Sichtfenster, insbesondere ein Tiefsichtfenster, eines Fahrzeugs, insbesondere eines Nutzfahrzeugs, zur Aufnahme einer absenkbaren Scheibe, insbesondere einer Seitenscheibe, des Fahrzeugs;
- Fig. 1B: zeigt eine, insbesondere absenkbare, Scheibe für den erfindungsgemäßen Rahmen gemäß Fig. 1A;
- Fig. 1C: zeigt den erfindungsgemäßen Rahmen gemäß Fig. 1A mit der, insbesondere absenkbaren, Scheibe gemäß Fig. 1B in teilweise geöffneter/geschlossener Stellung;
- Fig. 2A: zeigt eine Seitenansicht des erfindungsgemäßen Rahmens gemäß Fig. 1A bevor die Scheibe in den Dichtbereich eingetreten ist;
- Fig. 2B: zeigt eine Seitenansicht des erfindungsgemäßen Rahmens gemäß Fig. 1A während des Eintretens der Scheibe in den Dichtbereich;
- Fig. 2C: zeigt eine andere Perspektive der Fig. 2B;
- Fig. 2D: zeigt eine andere Perspektive der Fig. 2B;
- Fig. 3: zeigt ein erfindungsgemäßes Tiefsichtfenster in einer Tür eines Nutzfahrzeugs mit einer speziellen Form;
- Fig. 4A: zeigt einen Schnitt eines Teils eines erfindungsgemäßen Rahmens im Schnitt A-A aus Fig. 3 bevor die Scheibe in den Dichtbereich eingetreten ist;
- Fig. 4B: zeigt einen Schnitt eines Teils eines erfindungsgemäßen Rahmens im Schnitt A-A aus Fig. 3 während des Eintretens der Scheibe in den Dichtbereich;
- Fig. 5A: zeigt eine Seitenansicht eines erfindungsgemäßen Rahmens im Schnitt A-A aus Fig. 3 bevor die Scheibe in den Dichtbereich eingetreten ist;
- Fig. 5B: zeigt eine Seitenansicht eines erfindungsgemäßen Rahmens im Schnitt A-A aus Fig. 3 während des Eintretens der Scheibe in den Dichtbereich;
- Fig. 6A: zeigt eine vergrößerte Ansicht einer oberen Dichtkontur der Dichtmittel aus Fig. 5A bzw. Fig. 5B und zwar im Schnitt A-A aus Fig. 3;
- Fig. 6B: zeigt eine vergrößerte Ansicht einer unteren Dichtkontur der Dichtmittel aus Fig. 5A bzw. Fig. 5B und zwar im Schnitt A-A aus Fig. 3;
- Fig. 6C: zeigt eine vergrößerte Ansicht einer vorderen Dichtkontur der Dichtmittel im Schnitt C-C aus Fig. 3; und
- Fig. 6D: zeigt eine vergrößerte Ansicht einer hinteren Dichtkontur der Dichtmittel im Schnitt C-C aus Fig. 3.

### BESCHREIBUNG BEVORZUGTER AUSFÜHRUNGSFORMEN

Im Folgenden soll die Erfindung anhand von in den Zeichnungen dargestellten Ausführungsformen näher erläutert werden, wobei in sämtlichen Zeichnungen im Wesentlichen funktionsgleiche Elemente die gleichen Bezugszeichen haben.

Die Zeichnungen sind schematische Zeichnungen, die nicht maßstabsgetreu sind. Einige Elemente in den Zeichnungen können übertriebene Abmessungen aufweisen, um Aspekte der vorliegenden Offenbarung zu betonen und/oder für eine bessere Präsentationsklarheit. Zur Vereinfachung werden identische Bezugszeichen verwendet, um identische Elemente zu kennzeichnen, die in den Zeichnungen gemeinsam enthalten sind. Es ist vorgesehen, dass Elemente und Merkmale einer Ausführungsform vorteilhaft in andere Ausführungsformen ohne weitere Erwähnung eingebaut werden können. Im Allgemeinen werden nur die Unterschiede bezüglich individueller Ausführungsformen beschrieben.

Jedes Ausführungsbeispiel dient zur Erläuterung der Offenbarung und soll nicht als Beschränkung der Offenbarung verstanden werden. Darüber hinaus können Merkmale, die als Teil einer Ausführungsform dargestellt oder beschrieben werden, in Verbindung mit anderen Ausführungsformen verwendet werden, um eine weitere Ausführungsform zu erzeugen. Es ist beabsichtigt, dass die Beschreibung solche Modifikationen und Variationen einschließt.

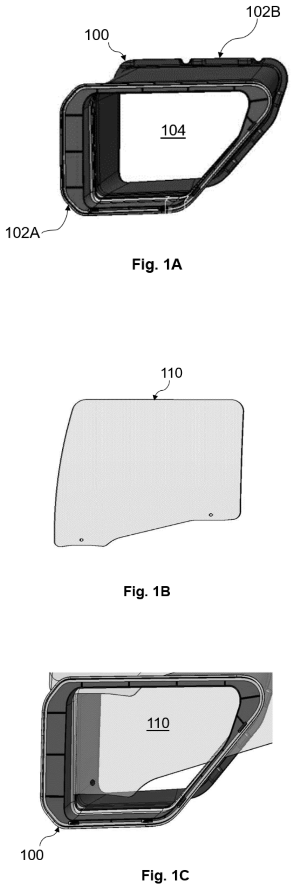

Fig. 1A zeigt einen erfindungsgemäßen Rahmen 100 für ein Sichtfenster, insbesondere ein Tiefsichtfenster, eines Fahrzeugs, insbesondere eines Nutzfahrzeugs, zur Aufnahme einer absenkbaren Scheibe, insbesondere einer Seitenscheibe, des Fahrzeugs, welche in Fig. 1B dargestellt ist. Wie in Fig. 1A erkennbar, kann der Rahmen 100, beispielsweise zur Montage, optionale Befestigungsabschnitte 102A, 102B bzw. optionale Montageflächen 102A, 102B aufweisen, welche den Einbau des Rahmens 100, z.B. in einer Tür, z.B. Fahrertür und/oder Beifahrertür, eines Fahrzeugs, insbesondere eines Nutzfahrzeugs, wie eines LKWs, erleichtern kann. Diese Befestigungsabschnitte 102A, 102B können beispielsweise um den äußeren Umfang des Rahmens 100 verlaufen, beispielsweise kontinuierlich oder unterbrochen. Der Rahmen 100 kann eine Öffnung 104 ausbilden bzw. definieren, welche durch die Scheibe 110 (vgl. Fig. 1B), verdeckbar, blockierbar, verschließbar und/oder öffenbar ist, zumindest wenigstens teilweise.

Der Rahmen 100 kann eingerichtet sein zur Aufnahme einer Scheibe 110, insbesondere einer absenkbaren Scheibe 110 (vgl. Fig. 1B), z.B. aus einem Glasmaterial und/oder zur Befestigung in einem anderen System, z.B. einem Fahrzeug, insbesondere einem Nutzfahrzeug, vorzugsweise einem Fahrerhaus eines Lastkraftwagens (LKW), beispielsweise einer Tür, wie einer Fahrertür und/oder Beifahrertür desselben. Fig. 1C zeigt den Rahmen 100 mit der absenkbaren Scheibe 110. Der Rahmen 100 kann, z.B. durch die Scheibe 110 bzw. Fensterscheibe 110, z.B. aus Glas, eine Trennung, Barriere und/oder Grenze zwischen einem Innenraum bzw. einem Innenbereich, z.B. einem Inneren der Fahrerkabine und einem Außenraum bzw. einem Außenbereich, z.B. der Umgebung, bereitstellen.

Der Rahmen 100, wie z.B. in Fig. 1C dargestellt, kann für ein Tiefsichtfenster, z.B. also ein Fenster, insbesondere ein Sichtfenster, verwendet werden beispielsweise bei Fahrzeugen, insbesondere Nutzfahrzeugen, wie z.B. ein Lastkraftwagen (LKW) oder dergleichen und z.B. tiefer, niedriger und/oder auf geringerer Höhe, z.B. in der Seitenwand bzw. einer Tür und/oder Beifahrertür des Fahrzeugs angeordnet, montiert, und/oder eingebaut werden als ein herkömmliches Seitenfenster des Fahrzeugs, beispielsweise darunter. Dies kann z.B. dem Fahrer und/oder einem oder mehreren der Insassen, eine verbesserte und/oder vergrößerte Sicht auf die Umgebung ermöglichen.

Wie in Fig. 1C dargestellt, kann die absenkbare Scheibe (vgl. Fig. 1B) als Fenster- bzw. Glasscheibe ausgebildet sein, welche z.B. innerhalb des Rahmens, bewegbar ist. Beispielsweise kann die Scheibe 110 nach unten bewegt werden, insbesondere geöffnet werden (z.B. wenigstens teilweise; Öffnungsstellung), um z.B. die insbesondere durch den Rahmen 100 gebildete Öffnung 104 im Wesentlichen freizugeben, und/oder nach oben bewegt werden, insbesondere geschlossen werden (z.B. wenigstens teilweise; Verschlussstellung bzw. Schließstellung), um z.B. die insbesondere durch den Rahmen 100 gebildete Öffnung 104 im Wesentlichen zu blockieren. Dies ermöglicht es den Insassen, beispielsweise die Belüftung im Fahrzeug zu kontrollieren und/oder mit der Außenumgebung zu interagieren, ohne dafür die Türen öffnen zu müssen. Derartige Fenster können z.B. mittels einem elektrischen Schalter oder Kurbel betätigbar sein. Dies bietet den Insassen ferner die Möglichkeit, die Seitenfenster z.B. nach Bedarf zu öffnen und/oder zu schließen, um die Luftzirkulation zu verbessern und/oder mit Personen außerhalb des Fahrzeugs zu kommunizieren, ohne dafür die Türen öffnen zu müssen.

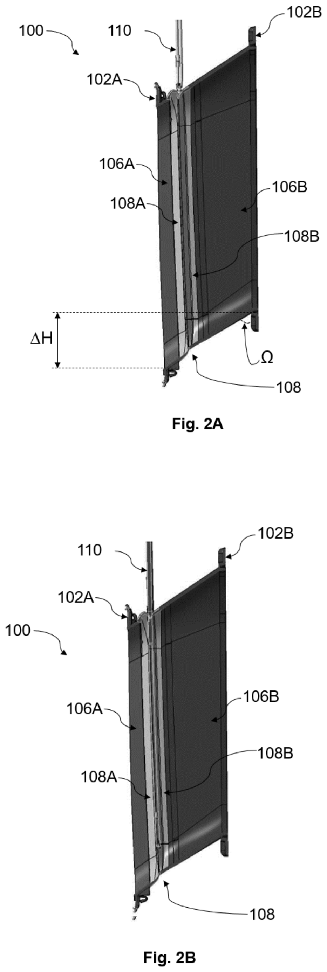

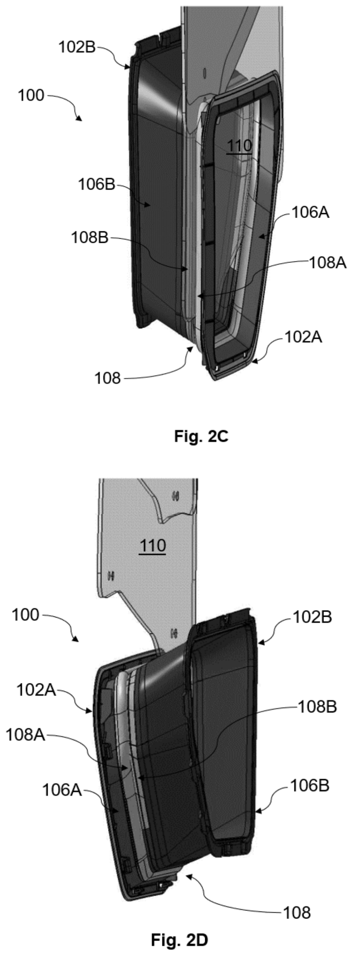

Wie in den verschiedenen Ansichten der Fig. 2A-D erkennbar, kann der hierin beschriebene Rahmen 100 für ein Sichtfenster, insbesondere ein Tiefsichtfenster, zweiteilig konzipiert, ausgebildet, ausgestaltet, konstruiert und/oder aufgebaut sein, was eine flexible Montage und/oder Demontage ermöglichen kann. Jedoch wäre auch eine einteilige Ausbildung denkbar. Diese Konstruktion kann eine signifikante Verbesserung in der Abdichtungstechnik darstellen, indem sie eine effektive Nass-/Trockenraum-Trennung bietet, die insbesondere für die absenkbare Scheibe von Bedeutung ist. Die zweiteilige Ausführung des Rahmens ermöglicht eine Anpassung an die absenkbare Scheibe 110, was die Bildung einer abdichtenden Barriere erleichtert und/oder somit das Eindringen von Wasser, Feuchtigkeit und/oder Verunreinigungen in den Fahrzeuginnenraum minimiert.

Wie in den Fig. 2A-D erkennbar, kann der, insbesondere zweiteilige, Rahmen 100 ein äußeres Rahmenelement 106A (z.B. erstes Rahmenteil 106A) und ein inneres Rahmenelement 106B (z.B. zweites Rahmenteil 106B) umfassen. Das äußere Rahmenelement 106A kann einer Außenseite des Fahrzeugs zuzuwenden sein bzw. zugewandt sein, z.B. nach und/oder im Wesentlichen während der Montage. Das innere Rahmenelement 106B kann einem Innenraum des Fahrzeugs zuzuwenden sein bzw. zugewandt sein, z.B. nach und/oder im Wesentlichen während der Montage. Diese Konfiguration kann eine effiziente und/oder effektive Abdichtung zwischen dem Fahrzeuginneren und der Umgebung ermöglichen, indem sie eine Schnittstelle zwischen der absenkbaren Scheibe und dem Rahmen schafft.

Insbesondere in montiertem Zustand (vgl. Fig. 2A-D), kann der, insbesondere zweiteilige, Rahmen 100 einen Dichtbereich 108 definieren, vorgeben und/oder ausbilden. Der Dichtbereich 108 kann ein Bereich Abschnitt und/oder eine Region sein, der z.B. im Wesentlichen zwischen den hierin beschriebenen Rahmenelementen, z.B. dem äußeren Rahmenelement 106A und dem inneren Rahmenelement 106B vorgesehen und/oder ausgebildet ist. Der Dichtbereich 108 kann eine insbesondere effektive Barriere, Schicht, Grenze und/oder Blockade gegen Verunreinigungen wie z.B. Wasser, Luft und/oder Schmutz bereitzustellen, was z.B. unter anspruchsvollen Fahrbedingungen von Bedeutung ist.

Der Dichtbereich 108 kann eingerichtet sein, eine insbesondere abdichtende Barriere, insbesondere eine Nass-/Trockenraum-Trennung, für die absenkbare Scheibe 110 bereitzustellen. Der Dichtbereich 108 kann beispielsweise so konzipiert sein, dass sie eine insbesondere effektive Abdichtung in im Wesentlichen jeder Position und/oder Stellung der Scheibe 110 gewährleistet werden kann. Ferner kann der Dichtbereich 108 sicherstellen, dass die Abdichtung bzw. Trennung auch bei einer Bewegung der Scheibe und/oder unter Einfluss von externen Kräften intakt bzw. aufrechterhalten bleibt.

Wie in den Fig. 2A-2D zu erkennen, kann die absenkbare Scheibe 110 im Wesentlichen zwischen dem äußeren Rahmenelement 106A und dem inneren Rahmenelement 106B angeordnet bzw. montiert und/oder bewegbar, insbesondere absenkbar, z.B. öffenbar und/oder hochfahrbar z.B. schließbar, sein. Diese Konfiguration kann eine präzise Führung und/oder Positionierung der Scheibe 110, insbesondere im Wesentlichen während des Absenk- und/oder Hochfahrprozesses ermöglichen, was nicht nur die mechanische Belastung auf die Scheibe 110 selbst, sondern auch auf die Dichtungselemente bzw. den Dichtbereich 108 reduzieren kann. Der Dichtbereich 108 kann eine insbesondere kontinuierliche Anpassung des Anpressdrucks an die Scheibe 110 bereitstellen, z.B. in Abhängigkeit von einer Position/Stellung der Scheibe 110. Dies ist besonders vorteilhaft unter variierenden Betriebsbedingungen, wie unterschiedlichen Fahrzeuggeschwindigkeiten oder bei wechselnden Wetterbedingungen, da es die Integrität der Nass-/Trockenraum-Trennung aufrechterhalten kann.

Wie in Fig. 2A-D erkennbar, kann sich der Dichtbereich 108 im Wesentlichen zwischen dem äußeren Rahmenelement 106S und dem inneren Rahmenelement 106B befinden. Der Dichtbereich 108 (und/oder die Scheibe 110) befinden sich als Beispiel nicht genau mittig zwischen dem äußeren Rahmenelement 106A und dem inneren Rahmenelement 106B. Vielmehr befindet sich der Dichtbereich 108, z.B. näher an dem äußeren Rahmenelement 106A als an dem inneren Rahmenelement 106B. Dies kann z.B. die Montage und/oder Demontage erleichtern. Wie ebenfalls in den Fig. 2A-D erkennbar, kann der Rahmen 100 (bzw. die Rahmenelemente 106A-B) einen, insbesondere versetzten, Querschnitt aufweisen, der im Wesentlichen schräg, geneigt und/oder gewinkelt verläuft (z.B. unter einem Winkel Ω, wie in Fig. 2A dargestellt). Dies kann z.B. ermöglichen, dass das äußere Rahmenelement 106A (vgl. z.B. Fig. 2A/B) sich, insbesondere nach der Montage in einer Tür, z.B. Fahrertür/Beifahrertür eines Fahrzeugs, insbesondere eines Nutzfahrzeugs, vorzugsweise eines LKWs, auf einer anderen Höhe befindet, als das innere Rahmenelement 106B. Zwischen dem äußeren Rahmenelement 106A und dem inneren Rahmenelement 106B, bzw. jeweils einer Unterkante (z.B. des Rahmens oder des Befestigungsabschnitts) des entsprechenden Rahmenelements, kann z.B. ein Höhenversatz, ΔH, wie in Fig. 2A dargestellt, bereitgestellt sein. Dadurch können die Funktionen und/oder Vorteile eines Tiefsichtfensters, wie z.B. vergrößerte Sicht, verbessert bzw. erhöht werden.

Wie in Fig. 2B-D dargestellt, kann die, insbesondere abdichtende, Barriere 108 bei einer Bewegung der absenkbaren Scheibe 110 im Wesentlichen aufrechterhalten werden und/oder im Wesentlichen dichtend bleiben. Beispielsweise kann die, insbesondere abdichtende, Barriere 108 insbesondere im Wesentlichen während des Absenkens und/oder Hochfahrens der Scheibe aufrechterhalten werden und/oder im Wesentlichen dichtend bleiben. Diese spezifischen Mechanismen der Kommunikation zwischen den Komponenten des Rahmens und der absenkbaren Scheibe ermöglichen es, dass trotz der Bewegung der Scheibe 110, sei es beim Absenken z.B. für frische Luftzufuhr und/oder beim Hochfahren z.B. zur Schließung des Fensters, die Integrität der Barriere nicht kompromittiert wird. Die Aufrechterhaltung der Barriere 108 im Wesentlichen während der Bewegung der Scheibe kann sicherstellen, dass Wasser, Feuchtigkeit und/ Verunreinigungen darüber nicht in den Innenraum des Fahrzeugs eindringen können. Die Fähigkeit, eine insbesondere abdichtende Barriere 108 zu gewährleisten, während die Scheibe 110 ihre Position bzw. Stellung ändert, kann einen erheblichen Vorteil in Bezug auf die Funktionalität und/oder Sicherheit des Fahrzeugs bieten, indem sie einen effektiven Schutz gegen das Eindringen von Wasser, Feuchtigkeit und/oder Verunreinigungen bietet, unabhängig von der Position der Seitenscheibe. Die insbesondere abdichtende Barriere 108 kann beispielsweise in dem Dichtbereich 108 angeordnet sein bzw. diesen bereitstellen und/oder ausbilden.

Das äußere Rahmenelement 106A und das innere Rahmenelement 106B können jeweils ein Dichtmittel (108A, 108B) umfassen. Beispielsweise kann das äußere Rahmenelement 106A ein erstes Dichtmittel 108A (z.B. Außendichtmittel) und das innere Rahmenelement 106B ein zweites Dichtmittel 108B (z.B. Innendichtmittel) umfassen, oder umgekehrt. Durch die Verwendung von Dichtmitteln (108A, 108B) in beiden Rahmenelementen (106A, 106B) kann eine doppelte und/oder duale Abdichtungsebene geschaffen werden, die eine effektivere Isolierung gegenüber äußeren Einflüssen wie Verunreinigungen, Schmutz und/oder Feuchtigkeit bietet.

Wie am besten in Fig. 2A zu erkennen, können das Dichtmittel 108A des äußeren Rahmenelements 106A und das Dichtmittel 108B des inneren Rahmenelements 106B einander im Wesentlichen gegenüberliegen bzw. einander gegenüberliegend angeordnet sein, was eine Verbesserung in der Effizienz und Wirksamkeit der Abdichtung zwischen dem Fahrzeuginneren und der Außenumgebung ermöglichen kann. Durch die Positionierung der Dichtmittel 108A-B kann sichergestellt werden, dass die absenkbare Scheibe 110 in jeder Position bzw. Stellung innerhalb des Rahmens 100, sei es vollständig geschlossen, teilweise geöffnet oder vollständig geöffnet, eine im Wesentlichen konsistente, konstante und/oder gleichbleibende Abdichtung erfährt. Diese Anordnung trägt wesentlich zur Langlebigkeit und Zuverlässigkeit des Dichtsystems bei, da sie die Wahrscheinlichkeit von Leckagen und damit verbundenen Schäden durch eindringendes Wasser, eindringende Feuchtigkeit und/oder Verunreinigungen minimiert. Darüber hinaus erleichtert die gegenüberliegende Anordnung der Dichtmittel 108A-B die Montage und Wartung, da ein Austausch der Dichtmittel ermöglicht wird.

Wie ferner am besten in Fig. 2A gezeigt, kann in montiertem Zustand, also beispielsweise wenn der Rahmen im Wesentlichen vollständig zusammengesetzt, zusammengebaut, installiert bzw. montiert ist, das Dichtmittel 108A des äußeren Rahmenelements 106A in Wirkverbindung, insbesondere in vorzugsweise direktem Kontakt, mit dem Dichtmittel 108B des inneren Rahmenelements 106B stehen. Das Dichtmittel 108A des äußeren Rahmenelements 106A und das Dichtmittel 108B des inneren Rahmenelements 106B, können insbesondere im Wesentlichen vollständig, aneinander anliegen, insbesondere kraftschlüssig und/oder reibschlüssig. Beispielsweise kann die Dichtlippe des Dichtmittels 108A an der Dichtlippe des Dichtmittels 108B anliegen. Alternativ oder zusätzlich können das Dichtmittel 108A des äußeren Rahmenelements 106A und das Dichtmittel 108B des inneren Rahmenelements 106B gegeneinanderdrücken, insbesondere bevor die absenkbare Scheibe 110 in den Dichtbereich eintritt (vgl. Fig. 2A). Diese Dichtmittel 108A-B können im Wesentlichen vollständig aneinander anliegen, was eine nahezu lückenlose Abdichtung zwischen dem äußeren und inneren Rahmenelement 106A-B bewirken kann. Dies ist vorteilhaft, um das Eindringen von Verunreinigungen und/oder Feuchtigkeit zu minimieren und somit die Integrität des Fahrzeuginnenraums zu schützen. Darüber hinaus wird durch das kraftschlüssige Anliegen der Dichtmittel 108AB eine mechanische Verbindung, insbesondere eine Druckverbindung, erzeugt, die nicht nur auf der bloßen Berührung basiert, sondern auch auf einer Kraftübertragung, die sicherstellen kann, dass die Dichtmittel 108A-B unter verschiedenen Betriebsbedingungen, wie Vibrationen oder Temperaturschwankungen, in effektivem Kontakt bleiben. Die Option, dass die Dichtmittel 108A-B gegeneinanderdrücken, verstärkt diesen Effekt, indem ein vorzugsweise kontinuierlicher Druck aufrechterhalten wird, der die Dichtwirkung über die Zeit stabilisieren und somit eine im Wesentlichen dauerhafte Abdichtung gewährleisten kann. Besonders hervorzuheben ist, dass diese verbesserte Dichtungsmechanik bereits greift, bevor die absenkbare Scheibe 110 in den Dichtbereich 108 eintritt. Dies prädestiniert den Rahmen 100 dazu, bereits im Voraus eine abdichtende Barriere 108 zu schaffen, die den Eintritt von Verunreinigungen und/oder Feuchtigkeit bzw. Schmutz effektiv verhindert, noch bevor die Scheibe 110 selbst in eine bestimmte Position/Stellung gebracht wird.

Das Dichtmittel 108A des äußeren Rahmenelements 106A und das Dichtmittel 108B des inneren Rahmenelements 106B können, wie am besten in Fig. 2B gezeigt, wenigstens teilweise, insbesondere kraftschlüssig,
aneinander, und/oder,
insbesondere beidseitig, an der Scheibe 110 anliegen,
während die absenkbare Scheibe 110 in den Dichtbereich 108 eintritt oder nachdem die absenkbare Scheibe 110 in den Dichtbereich 108 eingetreten ist.

Die Möglichkeit, dass die Dichtmittel 108A-B zusätzlich an der Scheibe 110 anliegen und insbesondere beidseitig an der Scheibe 110 anliegen, verbessert die Dichtwirkung weiter, indem sie eine kontinuierliche, dynamische und/oder anpassbare Abdichtung 108, 108A-B entlang der Kanten und/oder Fläche der absenkbaren Scheibe 110 gewährleistet. Dies ist besonders relevant, während die absenkbare Scheibe in den Dichtbereich eintritt oder nachdem sie in den Dichtbereich eingetreten ist, da es sicherstellt, dass die Abdichtung im Wesentlichen zu jedem Zeitpunkt der Bewegung der Scheibe 110 aufrechterhalten bleibt.

Das Dichtmittel 108A des äußeren Rahmenelements 106A und/oder das Dichtmittel 108B des inneren Rahmenelements 106B können als eine umlaufende Dichtung ausgebildet sein, die insbesondere jeweils eine im Wesentlichen in sich geschlossene, insbesondere lückenlose, Dichtkontur 108 bilden, die eine im Wesentlichen kontinuierliche, konstante und/oder ununterbrochene Barriere 108 z.B. gegen das Eindringen von Verunreinigungen und/oder Feuchtigkeit schaffen kann. Die umlaufende Dichtung verbessert die Isolierung des Fahrzeuginnenraums gegenüber äußeren Bedingungen und trägt somit zu einem erhöhten Komfort der Insassen bei. Durch die in sich geschlossene Dichtkontur 108 wird die Wahrscheinlichkeit von Leckagen minimiert, was besonders in extremen Wetterbedingungen und/oder z.B. bei der Durchfahrt durch Waschanlagen von Bedeutung ist. Hierdurch kann auch eine verbesserte Abdichtungseffizienz bereitgestellt werden.

Das Dichtmittel 108A des äußeren Rahmenelements 106A und/oder das Dichtmittel 108B des inneren Rahmenelements 106B können in Bezug auf Form, Material und/oder Anordnung aufeinander abgestimmt sein, insbesondere übereinstimmen und/oder einander im Wesentlichen entsprechen. Durch die Abstimmung in Bezug auf Form, Material und/oder Anordnung der Dichtmittel 108A-B des äußeren und des inneren Rahmenelements 106A-B kann eine Verbesserung der Abdichtungseffizienz und/oder der Langlebigkeit erreicht werden. Die Abstimmung kann dafür sorgen, dass die Dichtmittel 108A-B physisch ineinandergreifen bzw. aneinander angreifen und/oder eine nahtlose Übergangsfläche ausbilden und/oder, dass ihre Materialbeschaffenheiten und - eigenschaften, wie Elastizität, Härte und/oder Widerstandsfähigkeit gegen Umwelteinflüsse, harmonieren. Dies gewährleistet, dass die Dichtmittel 108A-B unter verschiedenen Betriebsbedingungen, einschließlich Temperaturschwankungen und/oder mechanischer Belastung, effektiv zusammenarbeiten, um z.B. eine im Wesentlichen konstante und/oder gleichbleibende Abdichtung zu gewährleisten. Die aufeinander abgestimmten Dichtmittel 108A-B minimieren zudem das Risiko von Leckagen, indem sie eine im Wesentlichen gleichmäßige Druckverteilung entlang des Dichtbereichs 108 fördern und/oder Spannungen, die zu Verformungen und/oder Rissen führen könnten, reduzieren.

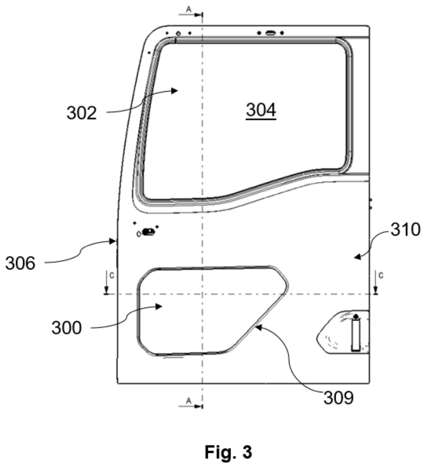

Fig. 3 zeigt ein erfindungsgemäßes Tiefsichtfenster 300, das in der Seitenwand 310 bzw. einer Tür 310 und/oder Beifahrertür 310 beispielsweise eines Fahrzeugs, insbesondere eines Nutzfahrzeugs, wie z.B. ein Lastkraftwagen (LKW) (nur angedeutet in Fig. 3), tiefer, niedriger und/oder auf geringerer Höhe, z.B. des Fahrzeugs angeordnet, montiert, und/oder eingebaut ist, um z.B. dem Fahrer und/oder einem oder mehreren der Insassen eine verbesserte und/oder vergrößerte Sicht auf die Umgebung zu ermöglichen. Das Tiefsichtfenster 300 kann z.B. unterhalb einer Seitenscheibe 302 der Fahrerkabine 304 angeordnet sein, beispielsweise in der unteren Hälfte der Tür 310 und/oder unterhalb des entsprechenden Seitensichtfensters 302 der Fahrerkabine 304.

Das Tiefsichtfenster 300 in Fig. 3 (und/oder der erfindungsgemäße Rahmen 100) weist eine spezielle Form auf, die nicht als einschränkend zu verstehen ist. Insbesondere umfasst das Tiefsichtfenster 300 eine Schräge, bzw. einen schrägen Verlauf bzw. eine schräge Kante 309. Der erfindungsgemäße Rahmen 100 bzw. die hierin beschriebenen Dichtmittel 108A/B können auf diese spezielle Form abgestimmt sein bzw. speziell daran angepasst sein, wie weiter unten beschrieben.

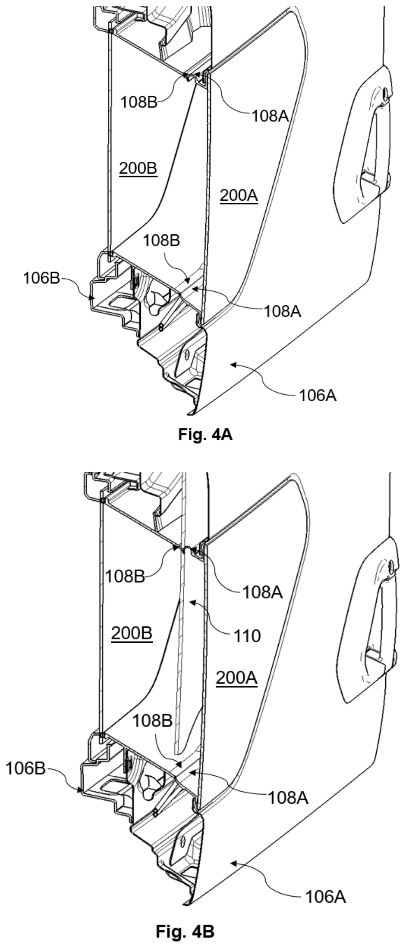

In Fig. 3 sind zwei Schnitte dargestellt. Schnitt A-A erstreckt sich im Wesentlichen vertikal durch das Tiefsichtfenster 300 und Schnitt C-C erstreckt sich im Wesentlichen horizontal durch das Tiefsichtfenster. In den weiteren Figuren 4A-6D werden Begriffe wie "oben", "unten", "vorne" und "hinten" verwendet. "oben" bzw. "unten" kann im Wesentlichen entlang/in Richtung der vertikalen Richtung, d.h. des Schnittes A-A, verstanden werden. Eine "obere" Dichtkontur kann z.B. näher an dem Seitenfenster 302 angeordnet sein und/oder oberhalb/gegenüber einer "unteren" Dichtkontur. "vorne" bzw. "hinten" kann im Wesentlichen entlang/in Richtung der horizontalen Richtung, d.h. des Schnittes C-C, verstanden werden. Eine "vordere" Dichtkontur kann z.B. näher an der Fahrzeugfront 306 bzw. einer Vorderseite der Fahrerkabine 306 angeordnet sein und/oder eine "hintere" Dichtkontur näher an der Rückseite der Fahrerkabine 304, bzw. gegenüber der vorderen Dichtkontur.

Der Rahmen 100 der Fig. 4A-6D entspricht grundsätzlich/im Wesentlichen dem Rahmen 100 der Fig. 1A-2D, sodass insofern die vorherigen Ausführungen im Wesentlichen analog gelten und aus Gründen der Übersichtlichkeit an dieser Stelle nicht wiederholt werden. Die Fig. 4A-6D verdeutlichen weitere Details des erfindungsgemäßen Rahmens 100, des äußeren Rahmenelements 106A, des inneren Rahmenelements 106B sowie der Dichtmittel 108A/B, insbesondere eine Form, Anordnung und/oder Befestigung der Dichtmittel 108A/B.

Fig. 4A zeigt einen Schnitt eines Teils eines erfindungsgemäßen Rahmens 100 im Schnitt A-A aus Fig. 3 bevor die Scheibe 110 in den Dichtbereich 108 eingetreten ist und Fig. 4B zeigt einen Schnitt eines Teils eines erfindungsgemäßen Rahmens im Schnitt A-A aus Fig. 3 während des Eintretens der Scheibe 110 in den Dichtbereich 108. In dem dargestellten, montierten Zustand, also beispielsweise wenn der Rahmen im Wesentlichen vollständig zusammengesetzt, zusammengebaut, installiert bzw. montiert ist, kann das Dichtmittel 108A des äußeren Rahmenelements 106A in Wirkverbindung, insbesondere in vorzugsweise direktem Kontakt, mit dem Dichtmittel 108B des inneren Rahmenelements 106B stehen. Das Dichtmittel 108A des äußeren Rahmenelements 106A und das Dichtmittel 108B des inneren Rahmenelements 106B, können insbesondere im Wesentlichen vollständig, aneinander anliegen, insbesondere kraftschlüssig. Beispielsweise kann die Dichtlippe des Dichtmittels 108A an der Dichtlippe des Dichtmittels 108B anliegen, wie in den Fig. 4A-B gezeigt. Alternativ oder zusätzlich können das Dichtmittel 108A des äußeren Rahmenelements 106A und das Dichtmittel 108B des inneren Rahmenelements 106B gegeneinanderdrücken, insbesondere bevor die absenkbare Scheibe 110 in den Dichtbereich eintritt (s. z.B. untere Dichtkontur in Fig. 4A-B bzw. obere/untere Dichtkontur in Fig. 4A). Diese Dichtmittel 108A-B können im Wesentlichen vollständig aneinander anliegen, was eine nahezu lückenlose Abdichtung zwischen dem äußeren und inneren Rahmenelement 106A-B bewirken kann. Dies ist vorteilhaft, um das Eindringen von Verunreinigungen und/oder Feuchtigkeit zu minimieren und somit die Integrität des Fahrzeuginnenraums zu schützen. Darüber hinaus wird durch das kraftschlüssige Anliegen der Dichtmittel 108A-B eine mechanische Verbindung, insbesondere eine Druckverbindung, erzeugt, die nicht nur auf der bloßen Berührung basiert, sondern auch auf einer Kraftübertragung, die sicherstellen kann, dass die Dichtmittel 108A-B unter verschiedenen Betriebsbedingungen, wie Vibrationen oder Temperaturschwankungen, in effektivem Kontakt bleiben. Die Option, dass die Dichtmittel 108A-B gegeneinanderdrücken, verstärkt diesen Effekt, indem ein vorzugsweiser kontinuierlicher Druck aufrechterhalten wird, der die Dichtwirkung über die Zeit stabilisieren und somit eine im Wesentlichen dauerhafte Abdichtung gewährleisten kann. Besonders hervorzuheben ist, dass diese verbesserte Dichtungsmechanik bereits greift, bevor die absenkbare Scheibe 110 in den Dichtbereich eintritt. Dies prädestiniert den Rahmen 100 dazu, bereits im Voraus eine abdichtende Barriere 108 zu schaffen, die den Eintritt von Verunreinigungen und/oder Feuchtigkeit bzw. Schmutz effektiv verhindert, noch bevor die Scheibe 110 selbst in eine bestimmte Position/Stellung gebracht wird.

Die Fig. 4A und 4B zeigen ferner eine oder mehrere, z.B. feste (fest verbaute), unbewegliche, statische bzw. stationäre Scheiben 200A-B aufweisen, die mit dem Rahmen verbindbar bzw. verbunden sind. Ein Tiefsichtfenster kann optional wenigstens eine, insbesondere wenigstens zwei feste Scheiben 200A, 200B aufweisen, die an dem Rahmen, bzw. jeweils an den beiden (inneren/äußeren) hierin beschriebenen Rahmenelementen, z.B. dem äußeren Rahmenelement 106A und dem inneren Rahmenelement 106B anbringbar sind und/oder einander im Wesentlichen gegenüberliegen. Das Tiefsichtfenster kann beispielsweise eine Außenscheibe 200A, also eine Scheibe, welcher der Umgebung zugewandt ist bzw. zuzuwenden ist, aufweisen, welche z.B. aus Glas hergestellt ist und sich im Türaußenblech des Türrohbaus befindet. Das Tiefsichtfenster kann eine optionale Innenscheibe 200B, also eine Scheibe, die dem Innenraum zugewandt ist bzw. zuzuwenden ist, aufweisen, welche aus einem anderen Material, z.B. Polycarbonat, hergestellt ist und sich in der Türverkleidung befindet. Die feste Innenscheibe ist nicht zwingend notwendig, sondern kann als eine (weitere) Sicherheit z.B. zur Verbesserung der Akustik und/oder zur Abdichtung gegen Störeinflüsse dienen. Alternativ oder zusätzlich kann die feste Innenscheibe ferner zum Schutz beitragen, indem sie verhindern kann, dass jemand in die Öffnung bzw. den Kanal, z.B. des Rahmens, greifen kann, beispielsweise wenn die Scheibe abgesenkt wird. Die absenkbare Scheibe 110 bzw. die Kurbelscheibe kann sich z.B. zwischen den wenigstens zwei festen Scheiben 200A-B des Tiefsichtfensters bewegen (oder wenigstens zwischen den Rahmenelementen, z.B. wenn nur eine, z.B. feste Außenscheibe, jedoch keine Innenscheibe, verwendet wird) und/oder zwischen dem hierin beschriebenen äußeren Rahmenelement 106A und dem inneren Rahmenelement 106B bewegbar, insbesondere absenkbar und/oder hochfahrbar, sein. Die feste(n) Scheibe(n) 200A-B für das Tiefsichtfenster bzw. den hierin beschriebenen Rahmen können z.B. verklebt werden. Der Rahmen inklusive der festen Scheibe(n) 200A-B kann beispielsweise durch eine Steck-, Klippverbindung etc. im Türrohbau befestigt werden.

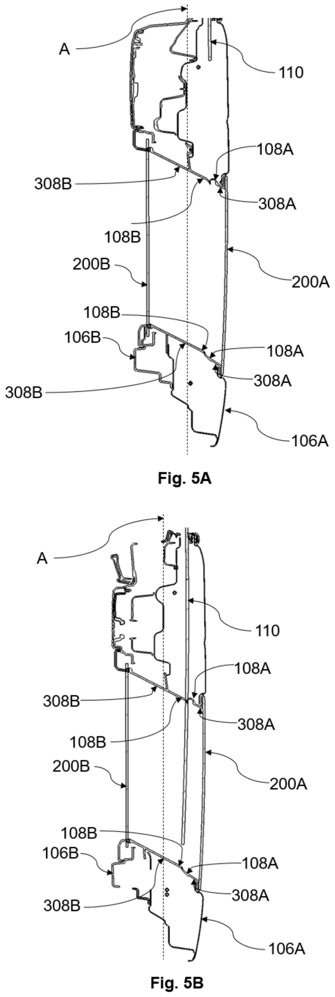

Fig. 5A zeigt eine Seitenansicht des erfindungsgemäßen Rahmens 100 im Schnitt A-A aus Fig. 3 bevor die Scheibe 110 in den Dichtbereich 108 eingetreten ist und Fig. 5B zeigt eine Seitenansicht des erfindungsgemäßen Rahmens 100 im Schnitt A-A aus Fig. 3 während des Eintretens der Scheibe 110 in den Dichtbereich. Wie in den Fig. 5A-B zu erkennen, kann ein Sichtkanal 308, insbesondere ein innerer Sichtkanal 308B und ein äußerer Sichtkanal 308A bereitgestellt sein. Der Sichtkanal 308A/308B kann dazu verwendet werden, dass entsprechende Dichtmittel 108A/108B zu befestigen, z.B. permanent bzw. unlösbar, oder lösbar. Beispielsweise kann das Dichtmittel 108B, z.B. des inneren Rahmenelements 106B an einem, z.B. inneren, Sichtkanal 308B ein Montageteil sein oder in dem, z.B. inneren, Sichtkanal 308B angespritzt sein. Alternativ oder zusätzlich kann das Dichtmittel 308A, z.B. des äußeren Rahmenelements 106A an einem, z.B. äußeren, Sichtkanal 308A ein Montageteil sein oder in dem, z.B. äußeren, Sichtkanal 308A angespritzt sein. Auch ein Kleben, z.B. Ankleben, und/oder Stecken, z.B. mittels einer Steckverbindung und/oder ein Klipsen, z.B. mittels einer Klippverbindung, wäre denkbar. Ferner sind in Fig. 5A die beiden festen Scheiben 200AB, wie eingangs erwähnt, zu erkennen, wobei die Ausführungen dazu im Wesentlichen analog gelten können.

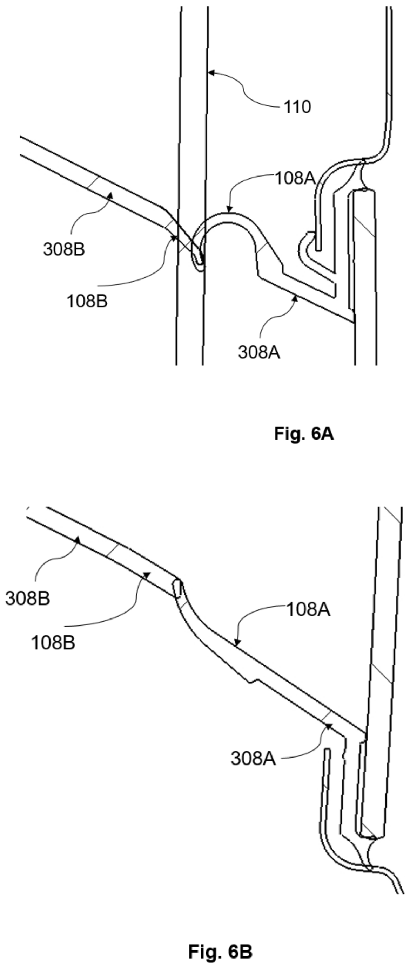

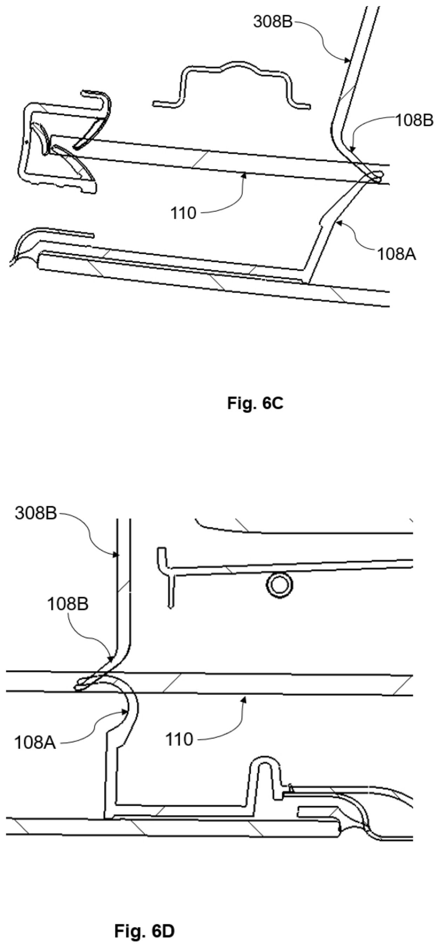

Wie bereits erwähnt, kann es sich bei dem Dichtmittel 108A des äußeren Rahmenelements 106A und/oder dem Dichtmittel 108B des inneren Rahmenelements 106B um eine umlaufende Dichtung handeln, die insbesondere jeweils eine im Wesentlichen in sich geschlossene, insbesondere lückenlose, Dichtkontur bilden. Das Dichtmittel 108A des äußeren Rahmenelements 106A und das Dichtmittel 108B des inneren Rahmenelements 106B können also eine Dichtkontur ausbilden. In dem Schnitt bzw. der Seitenansicht der Fig. 5A bzw. 5B, insbesondere in vertikaler Richtung A, ist eine obere Dichtkontur und eine untere Dichtkontur erkennbar. Die obere Dichtkontur ist in Fig. 6A in vergrößerter Ansicht, insbesondere gemäß Schnitt A-A aus Fig. 3, dargestellt, während die untere Dichtkontur in Fig. 6B in vergrößerter Ansicht, insbesondere gemäß Schnitt A-A aus Fig. 3, dargestellt ist. Die Fig. 6C zeigt eine vergrößerte Ansicht einer vorderen Dichtkontur der Dichtmittel 108A/B und zwar im Schnitt C-C aus Fig. 3, also diejenige Dichtkontur, die näher an der Fahrzeugfront 306 angeordnet ist und Fig. 6D zeigt eine vergrößerte Ansicht einer der vorderen gegenüberliegenden, insbesondere hinteren, Dichtkontur der Dichtmittel 108A/B und zwar im Schnitt C-C aus Fig. 3; also diejenige Dichtkontur, die sich an der Kante 309 aus Fig. 3 befindet. Mit anderen Worten, die Fig. 6C-D zeigen einen Querschnitt der Dichtmittel 108A/B gemäß Schnitt C-C in vergrößerter Ansicht. Es sei anzumerken, dass die Dichtmittel 108A/B in den Fig. 6A-6D nur angedeutet sind, d.h. jegliche Überschneidung mit der Scheibe 110 soll lediglich andeuten, dass das entsprechende Dichtmittel an der Scheibe anliegt, insbesondere dichtend, wie hierin beschrieben.

Wie bereits erwähnt, können das Dichtmittel 108A des äußeren Rahmenelements 106A und/oder das Dichtmittel 108B des inneren Rahmenelements 106B als eine umlaufende Dichtung ausgebildet sein, die insbesondere jeweils eine im Wesentlichen in sich geschlossene, insbesondere lückenlose, Dichtkontur bilden. Eine umlaufendende Dichtung bzw. eine, in sich geschlossene, insbesondere lückenlose, Dichtkontur, kann eine im Wesentlichen kontinuierliche, konstante und/oder ununterbrochene Barriere z.B. gegen das Eindringen von Verunreinigungen und/oder Feuchtigkeit schaffen. Wie in den Fig. 6A-6D zu erkennen ist, kann ein Profil und/oder eine Form des Dichtmittels 108A des äußeren Rahmenelements 106A und/oder des Dichtmittel 108B des inneren Rahmenelements 106B variieren, z.B. wenigstens abschnittsweise, z.B. entlang/in Richtung der Dichtkontur. Dies kann z.B. auf eine Form des Tiefsichtfensters 300 aus Fig. 3 zurückzuführen sein. Wie z.B. in Fig.6A und 6D zu erkennen, kann das Dichtmittel 108A des äußeren Rahmenelements 106A z.B. im Bereich einer oberen Dichtkontur (vgl. Fig. 6A) und/oder einer hinteren Dichtkontur (vgl. Fig. 6D) wenigstens teilweise, vorzugweise entgegen dem Uhrzeigersinn bzw. in Richtung der Scheibe 110, gewölbt, gebogen und/oder gekrümmt sein, z.B. die Form eines, insbesondere im Wesentlichen teilkreisförmigen, Hakens aufweisen, während das, insbesondere diesem gegenüberliegenden, Dichtmittel 108B des inneren Rahmenelements 106B im Wesentlichen geradlinig und/oder im Wesentlichen schräg, geneigt und/oder gewinkelt verlaufen kann. Dies kann z.B. den im Wesentlichen vertikalen Eintritt/Austritt bzw. den Durchgang der Scheibe 110 erleichtern und/oder eine Dichtwirkung während des Ein- bzw. Austretens bzw. beim Durchgang der Scheibe 110 aufrechterhalten. Durch diese Ausgestaltung ist es möglich, der schrägen Kante 309 des Tiefsichtfensters 300 (vgl. Fig. 3) Rechnung zu tragen und eine Dichtwirkung bereitzustellen bzw. aufrechtzuerhalten.

Wie z.B. in Fig. 6B und 6C zu erkennen, kann das Dichtmittel 108A des äußeren Rahmenelements 106A z.B. im Bereich einer unteren Dichtkontur (vgl. Fig. 6B) und/oder einer vorderen Dichtkontur (vgl. Fig. 6C) wenigstens teilweise, vorzugweise in Richtung des Uhrzeigersinns, gewölbt, gebogen und/oder gekrümmt sein, z.B. eine Art aufgebogene Form aufweisen, während das, insbesondere diesem gegenüberliegenden, Dichtmittel 108B des inneren Rahmenelements 106B im Wesentlichen geradlinig und/oder im Wesentlichen schräg, geneigt und/oder gewinkelt verlaufen kann. Dadurch kann erreicht werden, dass diese Dichtmittel im Wesentlichen vollständig aneinander anliegen, was eine nahezu lückenlose Abdichtung zwischen dem äußeren und inneren Rahmenelement 106A-B bewirken kann. Dies ist vorteilhaft, um das Eindringen von Verunreinigungen und/oder Feuchtigkeit zu minimieren und somit die Integrität des Fahrzeuginnenraums zu schützen.

Obwohl das Vorstehende auf Ausführungsformen der Offenbarung gerichtet ist, können andere und weitere Ausführungsformen der Offenbarung ohne Abweichung vom grundlegenden Umfang davon entwickelt werden, wobei der Umfang durch die nachfolgenden Ansprüche bestimmt wird.

### Bezugszeichenliste:

- 100: Rahmen
- 102A, 102B: Befestigungsabschnitte
- 104: Öffnung
- 106A: äußeres Rahmenelement
- 106B: inneres Rahmenelement
- 108: Dichtbereich bzw. Barriere
- 108A: Dichtmittel
- 108B: Dichtmittel
- 110: Scheibe
- 200A, 200B: Feste Scheibe(n) des Tiefsichtfensters
- 300: Tiefsichtfenster
- 302: Seitenfenster
- 304: Fahrerkabine
- 306: Fahrzeugfront
- 308A: Sichtkanal
- 308B: Sichtkanal
- 309: Kante
- 310: Tür

- ΔH: Höhenversatz
- Ω: Winkel
- A: Vertikale Richtung

## Patentansprüche

1. Rahmen für ein Sichtfenster, insbesondere ein Tiefsichtfenster, eines Fahrzeugs, insbesondere eines Nutzfahrzeugs, zur Aufnahme einer absenkbaren Scheibe, insbesondere einer Seitenscheibe, des Fahrzeugs;
wobei der Rahmen, insbesondere in montiertem Zustand, einen Dichtbereich definiert, der eingerichtet ist, eine, insbesondere abdichtende, Barriere, insbesondere eine Nass-/Trockenraum-Trennung, für die absenkbare Scheibe bereitzustellen.

2. Rahmen nach Anspruch 1, wobei der Rahmen einteilig oder zweiteilig ausgebildet ist, wobei der Rahmen einen äußeres Rahmenelement umfasst, das einer Außenseite des Fahrzeugs zuzuwenden ist, und ein inneres Rahmenelement umfasst, das einem Innenraum des Fahrzeugs zuzuwenden ist.

3. Rahmen nach Anspruch 2, wobei die absenkbare Scheibe zwischen dem äußeren Rahmenelement und dem inneren Rahmenelement bewegbar, insbesondere absenkbar und/oder hochfahrbar, ist.

4. Rahmen nach einem der vorstehenden Ansprüche 2-3, wobei sich der Dichtbereich zwischen dem äußeren Rahmenelement und dem inneren Rahmenelement befindet.

5. Rahmen nach einem der vorstehenden Ansprüche, wobei die, insbesondere abdichtende, Barriere bei einer Bewegung der absenkbaren Scheibe, insbesondere im Wesentlichen während des Absenkens und/oder Hochfahrens der Scheibe, im Wesentlichen aufrechterhalten wird, und/oder im Wesentlichen dichtend bleibt.

6. Rahmen nach einem der vorstehenden Ansprüche, wobei die, insbesondere abdichtende, Barriere durch wenigstens ein Dichtmittel, vorzugsweise wenigstens zwei Dichtmittel, ausgebildet ist.

7. Rahmen nach einem der vorstehenden Ansprüche 2-6, wobei das äußere Rahmenelement und das innere Rahmenelement jeweils ein Dichtmittel umfassen.

8. Rahmen nach Anspruch 7, wobei sich das Dichtmittel des äußeren Rahmenelements und das Dichtmittel des inneren Rahmenelements im Wesentlichen gegenüberliegen.

9. Rahmen nach einem der vorstehenden Ansprüche 7-8, wobei, insbesondere in montiertem Zustand, das Dichtmittel des äußeren Rahmenelements in Wirkverbindung, insbesondere in Kontakt, mit dem Dichtmittel des inneren Rahmenelements steht.

10. Rahmen nach einem der vorstehenden Ansprüche 7-9, wobei das Dichtmittel des äußeren Rahmenelements und das Dichtmittel des inneren Rahmenelements, insbesondere im Wesentlichen vollständig, aneinander anliegen, insbesondere kraftschlüssig, und/oder gegeneinanderdrücken, insbesondere bevor die absenkbare Scheibe in den Dichtbereich eintritt.

11. Rahmen nach einem der vorstehenden Ansprüche 7-10, wobei das Dichtmittel des äußeren Rahmenelements und das Dichtmittel des inneren Rahmenelements wenigstens teilweise, insbesondere kraftschlüssig,
aneinander, und/oder,
insbesondere beidseitig, an der Scheibe anliegen,
während die absenkbare Scheibe in den Dichtbereich eintritt oder nachdem die absenkbare Scheibe in den Dichtbereich eingetreten ist.

12. Rahmen nach einem der vorstehenden Ansprüche 7-11, wobei das Dichtmittel des äußeren Rahmenelements und/oder das Dichtmittel des inneren Rahmenelements als eine umlaufende Dichtung ausgebildet sind, die insbesondere jeweils eine im Wesentlichen in sich geschlossene, insbesondere lückenlose, Dichtkontur bilden.

13. Rahmen nach einem der vorstehenden Ansprüche 7-12, wobei das Dichtmittel des äußeren Rahmenelements und/oder das Dichtmittel des inneren Rahmenelements in Bezug auf Form, Material und/oder Anordnung aufeinander abgestimmt sind, insbesondere übereinstimmen und/oder einander im Wesentlichen entsprechen.

14. Sichtfenster, insbesondere Tiefsichtfenster, für ein Fahrzeug, insbesondere ein Nutzfahrzeug, umfassend:
einen Rahmen nach einem oder mehreren der Ansprüche 1-13, und
wenigstens eine Scheibe, die wenigstens teilweise innerhalb des Dichtbereichs bewegbar, insbesondere absenkbar und/oder hochfahrbar, ist.

15. Fahrzeug, insbesondere ein Nutzfahrzeug, das mit einem Rahmen nach einem oder mehreren der Ansprüche 1-13 und/oder einem Sichtfenster, insbesondere einem Tiefsichtfenster, nach Anspruch 14 ausgestattet ist.
